# EUROPEAN PATENT APPLICATION

(11) **EP 4 722 823 A1**
(43) Date of publication of application: **08.04.2026**
(21) Application number: 24815702.6
(22) Date of filing: 17.04.2024
(51) Int. Cl.: G04B 19/26, G04B 19/22, G04B 45/00

(54) **WATCH HAVING SOLAR SYSTEM PLANET ROTATING AND REVOLVING**

(30) Priority: 31.05.2023 KR 20230069957
(71) Applicant: Hyun, Young Gun, Anseong-si, Gyeonggi-do 17525 (KR)
(72) Inventor: Hyun, Young Gun, Anseong-si, Gyeonggi-do 17525 (KR)
(74) Representative: Danubia Patent & Law Office LLC
(86) International application number: PCT/KR2024/005140
(87) International publication number: WO 2024/248323

(57) **Abstract**

The present disclosure relates to a clock including rotating and revolving solar system bodies, the clock including: a Sun frame 110 configured to provide a solar image; an Earth frame 120 configured to provide an Earth image; a Moon frame 130 configured to provide a lunar image and revolve on a minute basis along a circumferential surface of the Earth frame 120; a first connection bar 140 configured to connect the Sun frame 110 and the Earth frame 120 and to cause the Earth frame 120 to revolve on an hourly basis along a circumferential surface of the Sun frame 110; a second connection bar 150 configured to connect the Earth frame 120 and the Moon frame 130 and to cause the Moon frame 130 to revolve on a minute basis along the circumferential surface of the Earth frame 110; a first clock movement 200 including a first minute hand arbor 210 that is coupled to a rear portion of the Sun frame 110 and causes the Sun frame 110 to rotate on a minute basis, and an hour hand arbor 220 that is connected to an upper end of the first connection bar 140 and causes the first connection bar 140 to rotate on an hourly basis; and a second clock movement 300 including a second hand arbor 310 that is coupled to a rear portion of the Earth frame 120 and causes the Earth frame 120 to rotate on a minute basis, and a second minute hand arbor 320 that is coupled to the second connection bar 150 and causes the second connection bar 150 to rotate on a minute basis.

## Description

### TECHNICAL FIELD

The present disclosure relates to a clock including rotating and revolving solar system bodies, and more specifically, to a clock including rotating and revolving solar system bodies configured such that the Earth and the Moon rotate and revolve around the Sun in accordance with the change of time, and displaying the time corresponding to the positions of the revolving Earth and Moon.

### BACKGROUND ART

Various time measurement technologies have been developed independently in different countries around the world due to human perceptual errors in observing celestial motions. With the advancement of astronomy, which evolved along with the heliocentric theory, and the progress of science and technology, including artificial satellites and the like, recent years have witnessed remarkable advancements in research on the origin of the universe.

However, the astronomy is a discipline that requires considerable time to understand for those with only a general education. In particular, although a significant amount of time is spent studying many topics related to celestial phenomena in elementary, middle, and high schools, many students still have a very limited understanding of the fundamental principles and concepts.

Accordingly, Korean Utility Model Registration No. 20-0252342 discloses a clock-type device that indicates the time according to a predetermined rotation cycle, in which the clock-type device allows observation of changes in lunar, solar and sidereal times and includes: a display unit for displaying diurnal motions of the Moon, the Sun, and the vernal equinox; a memory unit storing rotation cycles of the Moon, the Sun, and the vernal equinox around the Earth and phases of the Moon and the Sun based on the current time; and a control unit that controls the display unit to display information on the positions or the phases of the Moon, the Sun, and vernal equinox in real time using data provided from the memory unit.

However, according to the related art described above, pointers indicating the lunar, solar, and sidereal times merely rotate clockwise at respective preset cycles to provide information on the vernal equinox, which not only fails to substantially represent the movement of the solar system, but also fails to properly represent it from an educational perspective, making it difficult to visually express the rotation and revolution states of the Moon and the Earth, and the rotation state of the Sun, etc., and there is a problem that this ultimately makes it impossible to understand the principles and concepts of rotation and revolution.

### SUMMARY

### Technical Problem

In order to solve the problems described above, the present disclosure has been devised based on the related technology described above, and it is an object of the present disclosure to provide a clock including rotating and revolving solar system bodies, which is configured such that the Earth and the Moon rotate and revolve around the Sun in accordance with the change of time, and which indicates the time corresponding to positions of the revolving Earth and Moon, thereby increasing the understanding of the relationship between the rotating and revolving solar system bodies and the time.

In addition, another object of the present disclosure is to provide a clock including rotating and revolving solar system bodies which can be utilized for educational purposes by intuitively representing the Earth's revolution around the Sun and the Moon's revolution around the Earth and enhancing understanding of rotation and revolution.

In addition, another object of the present disclosure is to provide a clock including rotating and revolving solar system bodies, which is configured to display, as image information, rotating Sun, Earth, and Moon, and revolving Earth and Moon, while also outputting educational materials related to the rotation and revolution, thereby facilitating understanding of the principles and concepts of the rotation and revolution of the solar system bodies including the Sun, the Earth, and the Moon

### Technical Solution

In order to achieve the above and other objects, a clock including rotating and revolving solar system bodies according to an embodiment of the disclosure may include: a Sun frame 110 configured to provide a solar image; an Earth frame 120 configured to provide an Earth image; a Moon frame 130 configured to provide a lunar image and revolve on a minute basis along a circumferential surface of the Earth frame 120; a first connection bar 140 configured to connect the Sun frame 110 and the Earth frame 120 and to cause the Earth frame 120 to revolve on an hourly basis along a circumferential surface of the Sun frame 110; a second connection bar 150 configured to connect the Earth frame 120 and the Moon frame 130 and to cause the Moon frame 130 to revolve on a minute basis along the circumferential surface of the Earth frame 110; a first clock movement 200 including a first minute hand arbor 210 that is coupled to a rear portion of the Sun frame 110 and causes the Sun frame 110 to rotate on a minute basis, and an hour hand arbor 220 that is connected to an upper end of the first connection bar 140 and causes the first connection bar 140 to rotate on an hourly basis; and a second clock movement 300 including a second hand arbor 310 that is coupled to a rear portion of the Earth frame 120 and causes the Earth frame 120 to rotate on a minute basis, and a second minute hand arbor 320 that is coupled to the second connection bar 150 and causes the second connection bar 150 to rotate on a minute basis.

According to an embodiment of the present disclosure, the Earth frame 120 may be configured to provide information on hours while revolving around the Sun frame 110 and provide information on seconds based on rotation, and the Moon frame 130 is configured to provide information on minutes while revolving around the Earth frame 120.

According to an embodiment of the present disclosure, the clock may further include a rotation guide means 330 which is configured on a rear portion of the second clock movement 300 and rotatably coupled to the first connection bar 140.

According to an embodiment of the present disclosure, the clock may further include a rotation support panel 142 which is configured on a lower portion of the first connection bar 140 and into which the rotation guide means 330 is rotatably inserted.

According to an embodiment of the present disclosure, the clock may further include a weight member 340 which is configured at a lower branch point of the second clock movement 300 to prevent a change in azimuth of the second clock movement 300 when the first connection bar 140 performs a rotation on an hourly basis.

According to an embodiment of the present disclosure, the rotation guide means 330 may include: a guide cover 332 in close contact with a distal end of the rotation support panel 142; a rotation guide shaft 336 formed to protrude from a center of the guide cover 332 and inserted into a center of the rotation support panel 142; and a rotation guide 334 rotatably configured on an outer circumferential surface of the rotation guide shaft 336 and configured in close contact with an inner circumferential surface of the rotation support panel 142 so as to rotate along the outer circumferential surface of the rotation guide shaft 336 during a rotating operation of the first connection bar 140.

According to an embodiment of the present disclosure, the weight member 340 may include: a receiving body 342 coupled to a lower branch point of the second clock movement 300 and including a receiving groove formed therein into which a weight 344 is inserted; and a sealing cover 346 detachably coupled to a lower surface of the receiving body 342, sealing the receiving groove and preventing the weight 344 from being inadvertently separated.

According to an embodiment of the present disclosure, the clock may include a display device 430 configured in the Sun frame 110 and the Earth frame 120 respectively and configured to output images of the Sun and the Earth and information on rotation or revolution of the Sun and the Earth; a controller 420 configured to set information outputted through the display device 430; and a mounting frame 410 on which the controller 430 and the first clock movement 200 are mounted.

According to an embodiment of the present disclosure, the display device 430 may be configured to display information on hours corresponding to a current position of the Earth, information on minutes corresponding to a current position of a Moon frame 130, and information on seconds corresponding to a rotation position of the Earth frame 120.

### Advantageous Effects

According to embodiments of the present disclosure, the clock including rotating and revolving solar system bodies is configured such that the Earth and the Moon rotate and revolve around the Sun in accordance with the change of time, and it indicates the time corresponding to positions of the revolving Earth and Moon, thereby increasing the understanding of the relationship between the rotating and revolving solar system bodies and the time.

According to embodiments of the present disclosure, the clock including rotating and revolving solar system bodies can be utilized for educational purposes by intuitively representing the Earth's revolution around the Sun and the Moon's revolution around the Earth and enhancing understanding of rotation and revolution.

According to embodiments of the present disclosure, the clock including rotating and revolving solar system bodies is configured to display, as image information, rotating Sun, Earth, and Moon, and revolving Earth and Moon, while also outputting educational materials related to the rotation and revolution, thereby facilitating understanding of the principles and concepts of the rotation and revolution of the solar system bodies including the Sun, the Earth, and the Moon.

### BRIEF DESCRIPTION OF THE DRAWINGS

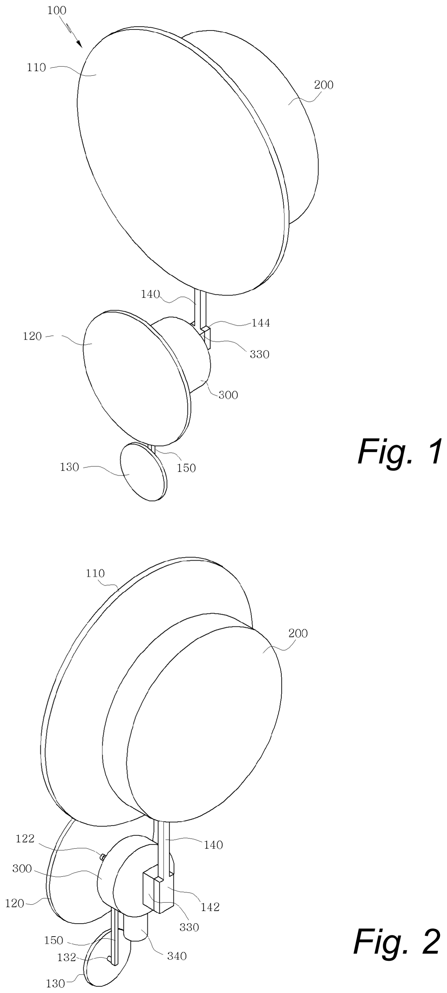

FIGS. 1 and 2 are perspective views illustrating a solar system clock according to an embodiment of the present disclosure.

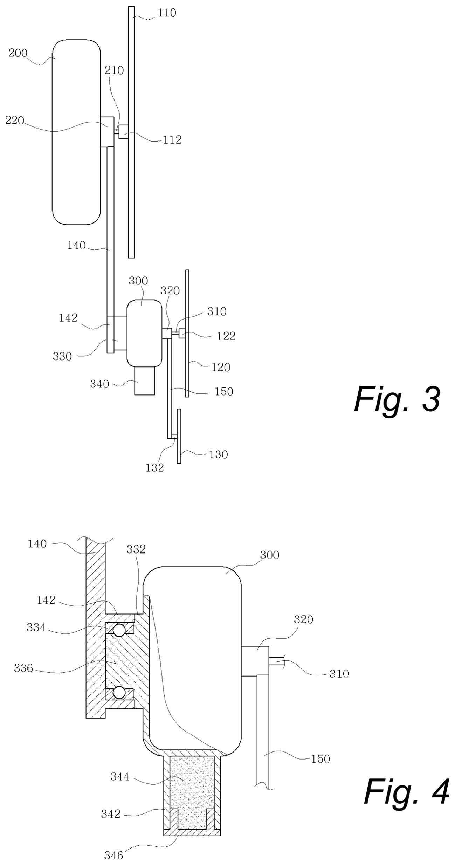

FIG. 3 is a side view illustrating a solar system clock according to an embodiment of the present disclosure.
FIG. 4 is a cross-sectional view illustrating a main part of a solar system clock according to an embodiment of the present disclosure.
FIG. 5 is a view illustrating a state in which an Earth frame and a Moon frame of the solar system clock are operated according to an embodiment of the present disclosure.
FIG. 6 is an exemplary view illustrating time information displayed through the solar system clock according to an embodiment of the present disclosure.

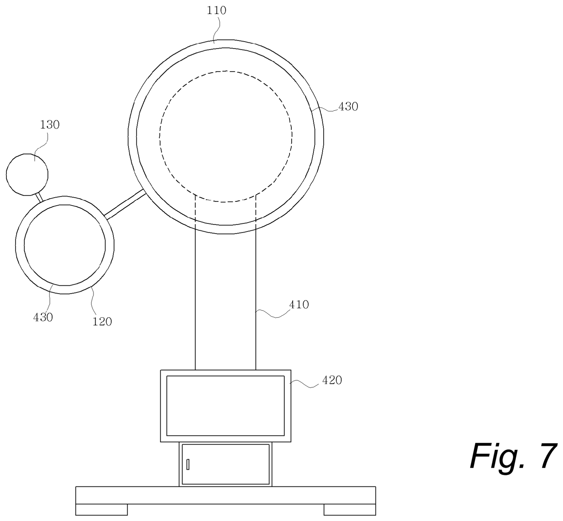

FIG. 7 is a diagram illustrating a mounting frame portion of the solar system clock according to an embodiment of the present disclosure.

### DETAILED DESCRIPTION

Hereinafter, embodiments of the present disclosure will be described in detail with reference to the accompanying drawings.

As illustrated, a clock including rotating and revolving solar system bodies according to the present disclosure includes a planetary frame 100 that provides images of the Sun, the Earth and the Moon, and first and second clock movements 200 and 300 connected to the planetary frame 100 and rotating the planetary frame 100 on the basis of hours, minutes, and seconds.

The planetary frame 100 includes a Sun frame 110 configured to display an image of the Sun, an Earth frame 120 configured to display an image of the Earth, and a Moon frame 130 configured to display an image of the Moon.

In an aspect, the Sun frame 110 includes a first connection housing 112 configured at a rear central portion and connected to the first clock movement 200, in particular, to a first minute hand arbor 210 of the first clock movement 200.

The Sun frame 110 is connected to the first clock movement 200 by the first connection housing 112, and is configured to perform a rotation by the rotating operation of the first minute hand arbor 210 configured in the first clock movement 200.

That is, the Sun frame 110 is configured to perform a 360-degree rotation over a 60-minute period.

The Earth frame 120 is configured to be spaced apart from an outer circumferential surface of the Sun frame 110, and includes a second connection housing 122 configured at a rear central portion and connected to the second clock movement 300, in particular, to a second hand arbor 310 of the second clock movement 300.

The Earth frame 120 is configured to perform a rotation by the rotating operation of the second hand arbor 310 formed in the second clock movement 300.

That is, the Earth frame 120 is configured to perform a 360-degree rotation over a 60-second period.

The Earth frame 120 is configured to perform a revolution along the outer circumferential surface of the Sun frame 110 by the second clock movement 300 and a first connection bar 140 to be described below.

At this time, the Earth frame 120 is configured to perform a 360-degree revolution along the outer circumferential surface of the Sun frame 110 over a 12-hour period.

The Moon frame 130 is configured to be spaced apart from an outer circumferential surface of the Earth frame 120, and includes a third connection housing 132 configured at a rear central portion and connected to the second clock movement 300, in particular, to a second minute hand arbor 320 of the second clock movement 300.

The Moon frame 130 is configured to perform a revolution around an axis center of the Earth frame 120 by the rotating operation of the second minute hand arbor 320.

That is, the Moon frame 130 is configured to perform a 360-degree circular movement along the outer circumferential surface of the Earth frame 120 based on a 60-minute period.

With the planetary frame 100 configured as described above according to the present disclosure, the Earth frame 120 provides information on hours, among the time units of hours, minutes, and seconds, while revolving around the Sun frame 110, and provides information on the minutes based on rotation, and the Moon frame 130 provides information on the seconds while revolving around the Earth frame 120.

In addition, according to the present disclosure, the planetary frame 100 includes the first connection bar 140 configured to connect the first clock movement 200 connected to the rear portion of the Sun frame 110 and the second clock movement 300 connected to the rear portion of the Earth frame 120 so that the Earth frame 120 can revolve about the Sun frame 110, and to support so that the azimuth of an Earth planet image displayed through the Earth frame 120 revolves in a fixed state when the Earth frame 120 revolves about the Sun frame 110.

The first connection bar 140 may be formed in the shape of a rectangular or circular frame or rod, in which an upper end of the first connection bar 140 is fixedly coupled to a lower branch point of an hour hand arbor 220 formed on the first clock movement 200, and a rotation support panel 142 is formed at a lower end of the first connection bar 140 so as to be rotatably connected to the second clock movement 300.

In an aspect, the rotation support panel 142 is formed to protrude forward from a lower portion of the first connection bar 140, and is configured such that a rotation guide 334 and a rotation guide shaft 336 of a rotation guide means 330 (to be described below) are inserted to a center portion thereof.

In addition, according to the present disclosure, the planetary frame 100 includes a second connection bar 150 configured to connect the second clock movement 300 and the Moon frame 130 and support so that the Moon frame 130 revolves along the circumferential surface of the Earth frame 120.

At this time, the second connection bar 150 is configured such that an upper end thereof is connected to the second minute hand arbor 320 of the second clock movement 300, and a fixed shaft is configured on a lower end of the second connection bar 150 so that the third connection housing 132, which is configured on a rear portion of the Moon frame 130, can be inserted and fixed therein.

The first clock movement 200 includes the hour hand arbor 220 that is formed on a rear portion of the Sun frame 110 and coupled with the first connection bar 140, and causes the first connection bar 140 to rotate in units of hours, and also includes the first minute hand arbor 210 that is passed through the hour hand arbor 220 and coupled to the first connecting housing 112 of the Sun frame 110, and revolves around the Sun frame 110 on a minute basis.

The second clock movement 300 includes the rotation guide means 330 configured on a rear portion and rotatably connected to the rotation support panel 142 of the first connection bar 140, and the second connection bar 150 is coupled to the front side of the second clock movement 300. The second clock movement 300 also includes the second minute hand arbor 320 configured to rotate the second connection bar 150 on a minute basis, the second hand arbor 310 that is passed through the second minute hand arbor 320 and coupled to the second connecting housing 122 formed on the Earth frame 120 so that the Earth frame 120 rotates on a minute basis, and a weight member 340 that is coupled to a lower circumferential surface of the second clock movement 300 to prevent a change in the azimuth of the second clock movement 300 when the first connection bar 140 rotates on an hourly basis.

In an aspect, the rotation guide means 330 includes a guide cover 332 coupled to a rear portion of the second clock movement 300 and in close contact with a distal end of the rotation support panel 142 of the first connection bar 140, the rotation guide shaft 336 formed to protrude from a center of the guide cover 332 and inserted into the center of the rotation support panel 142, and the rotation guide 334 rotatably configured on an outer circumferential surface of the rotation guide shaft 336 and in close contact with an inner circumferential surface of the rotation support panel 142 so as to rotate along the outer circumferential surface of the rotation guide shaft 336 when the first connection bar 140 is rotated.

This rotation guide means 330 is configured so that the rotation guide shaft 336 does not perform a rotation by the weight member 340, and only the rotation guide 334 rotates along the outer circumferential surface of the rotation guide shaft 336.

That is, when the first connection bar 140 performs a rotation by the hour hand arbor 210 of the first clock movement 200, causing the Earth frame 120 to revolve, only the rotation guide 334 rotates between the rotation support panel 142 and the rotation guide shaft 336.

The weight member 340 is coupled to a lower branch point of the second clock movement 300 and prevents a change in the azimuth of the second clock movement 300 during the rotating operation of the first connection bar 140. The weight member 340 includes a receiving body 342 formed with a receiving groove into which a weight 344 is inserted, and a sealing cover 346 detachably connected to a lower surface of the receiving body 342, sealing the receiving groove and preventing the weight 344 from being inadvertently detached.

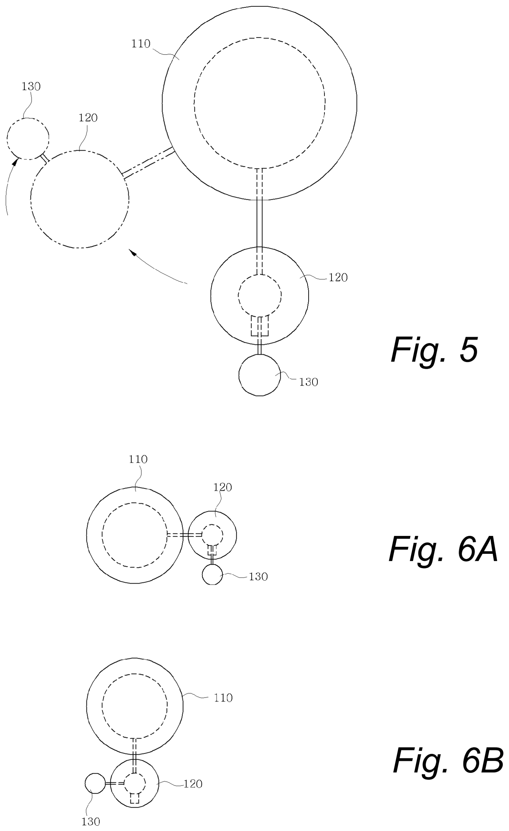

As illustrated in FIG. 6, according to the present disclosure configured as described above, time information is provided based on the position of the Earth frame 120 revolving around the Sun frame 110, and information on minutes is provided based on the position of the Moon frame 130 revolving around the Earth frame 120.

For example, as illustrated in FIG. 6A, when the Earth frame 120 is positioned at a right branch point of the Sun frame 110, the current time is determined to be 3 o'clock, and when the Moon frame 130 is positioned at the lower branch point of the Earth frame 120, the information on the current time is determined to be 30 minutes.

In addition, as illustrated in FIG. 6B, when the Earth frame 120 is positioned at the lower branch point of the Sun frame 110, that is, at the usual 6 o'clock direction, and the Moon frame 130 is positioned at the 9 o'clock direction corresponding to the right branch point of the Earth frame 120, the current time is determined to be 6:45.

Meanwhile, according to the present disclosure, images of the Sun, the Earth, and the Moon may be configured on the Sun frame 110, the Earth frame 120, and the Moon frame 130, respectively.

In this case, the images of the Sun, the Earth, and the Moon may be configured to be attached to the Sun frame 110, the Earth frame 120, and the Moon frame 130, but aspects are not limited thereto.

For example, a display device 430 for outputting images of the Sun and the Earth may be further provided in the Sun frame 110 and the Earth frame 120, respectively, and the display device 430 may be configured in a typical touch screen manner and connected to a controller 420 to be described below through a network to output information on the rotation and revolution of the Sun and the Earth.

That is, when the display device 430 is provided in the Sun frame 110 and the Earth frame 120, image information of the rotating and revolving Sun and Earth may be output, and when the user touches the display device 430, the information on the rotation or revolution of the Sun and the Earth may be output.

In this case, according to the present disclosure, a mounting frame 410, on which the first clock movement 200 is mounted, may be further provided to enable mounting of the Sun frame 110.

In addition, the controller 420 may be further provided on the mounting frame 410 to set the information to be output through the display device 430.

Furthermore, the Sun frame 110, which is provided with the display device 430, may be configured to output the time information corresponding to the current position of the Earth frame 120, and the Earth frame 120 may be configured to display information on minutes corresponding to the current position of the Moon frame 130 and information on seconds according to the rotation.

In this case, when the information on seconds based on the rotation of the Earth frame 120 is output, it may be possible to recognize the information on seconds referenced to the north pole of the Earth frame 120.

Preferably, by the controller 420, the time information changed from an initially set value (e.g., 00:00:00) may be output as information on hours and information on minutes and seconds through the display device 430 of the Sun frame 110 and the display device 430 of the Earth frame 120, respectively.

The above description is merely illustrative of the technical idea of the present disclosure, and those of ordinary skill in the art to which the present disclosure pertains will be able to make various modifications and variations without departing from the essential characteristics of the present disclosure. Accordingly, the embodiments disclosed in the present disclosure are not intended to limit the technical idea of the present disclosure, but to explain the technical idea, and the scope of the technical idea of the present disclosure is not limited by these embodiments. The scope of protection of the present disclosure should be construed based on the following claims, and all technical ideas within the scope of equivalents thereof should be construed as being included within the scope of the present disclosure

### [Sequence Listing Free Text]

| | | | |
|---|---|---|---|
| 100: | planetary frame | 110: | Sun frame |
| 112: | first connection housing | 120: | Earth frame |
| 122: | second connection housing | 130: | Moon frame |
| 132: | third connection housing | 140: | first connection bar |
| 142: | rotation support panel | 150: | second connection bar |
| 200: | first clock movement | 210: | first minute hand arbor |
| 220: | hour hand arbor | 300: | second clock movement |
| 310: | second hand arbor | 320: | second minute hand arbor |
| 330: | rotation guide means | 332: | guide cover |
| 334: | rotation guide | 336: | rotation guide shaft |
| 340: | weight member | 342: | receiving body |
| 344: | weight | 346: | sealing cover |
| 410: | mounting frame | 420: | controller |
| 430: | display device | | |

## Claims

1. A clock with solar system bodies, comprising:
a Sun frame 110 configured to provide a solar image;
an Earth frame 120 configured to provide an Earth image;
a Moon frame 130 configured to provide a lunar image and revolve on a minute basis along a circumferential surface of the Earth frame 120;
a first connection bar 140 configured to connect the Sun frame 110 and the Earth frame 120 and to cause the Earth frame 120 to revolve on an hourly basis along a circumferential surface of the Sun frame 110;
a second connection bar 150 configured to connect the Earth frame 120 and the Moon frame 130 and to cause the Moon frame 130 to revolve on a minute basis along the circumferential surface of the Earth frame 110;
a first clock movement 200 including a first minute hand arbor 210 that is coupled to a rear portion of the Sun frame 110 and causes the Sun frame 110 to rotate on a minute basis, and an hour hand arbor 220 that is connected to an upper end of the first connection bar 140 and causes the first connection bar 140 to rotate on an hourly basis; and
a second clock movement 300 including a second hand arbor 310 that is coupled to a rear portion of the Earth frame 120 and causes the Earth frame 120 to rotate on a minute basis, and a second minute hand arbor 320 that is coupled to the second connection bar 150 and causes the second connection bar 150 to rotate on a minute basis.

2. The clock with solar system bodies according to claim 1, wherein the Earth frame 120 is configured to provide information on hours while revolving around the Sun frame 110 and provide information on seconds based on rotation, and the Moon frame 130 is configured to provide information on minutes while revolving around the Earth frame 120.

3. The clock with solar system bodies according to claim 1, further comprising:
a rotation guide means 330 which is configured on a rear portion of the second clock movement 300 and rotatably coupled to the first connection bar 140; and
a rotation support panel 142 which is configured on a lower portion of the first connection bar 140 and into which the rotation guide means 330 is rotatably inserted.

4. The clock with solar system bodies according to claim 3, further comprising a weight member 340 configured at a lower branch point of the second clock movement 300 to prevent a change in azimuth of the second clock movement 300 when the first connection bar 140 performs a rotation on an hourly basis.

5. The clock with solar system bodies according to claim 3, wherein the rotation guide means 330 includes:
a guide cover 332 in close contact with a distal end of the rotation support panel 142;
a rotation guide shaft 336 formed to protrude from a center of the guide cover 332 and inserted into a center of the rotation support panel 142; and
a rotation guide 334 rotatably configured on an outer circumferential surface of the rotation guide shaft 336 and configured in close contact with an inner circumferential surface of the rotation support panel 142 so as to rotate along the outer circumferential surface of the rotation guide shaft 336 during a rotating operation of the first connection bar 140.

6. The clock with solar system bodies according to claim 4, wherein the weight member 340 includes:
a receiving body 342 coupled to a lower branch point of the second clock movement 300 and including a receiving groove formed therein into which a weight 344 is inserted; and
a sealing cover 346 detachably coupled to a lower surface of the receiving body 342, sealing the receiving groove and preventing the weight 344 from being inadvertently separated.

7. The clock with solar system bodies according to claim 1, comprising:
a display device 430 configured in the Sun frame 110 and the Earth frame 120 respectively and configured to output images of the Sun and the Earth and information on rotation or revolution of the Sun and the Earth;
a controller 420 configured to set information outputted through the display device 430; and
a mounting frame 410 on which the controller 430 and the first clock movement 200 are mounted.

8. The clock with solar system bodies according to claim 7, wherein the display device 430 is configured to display information on hours corresponding to a current position of the Earth, information on minutes corresponding to a current position of a Moon frame 130, and information on seconds corresponding to a rotation position of the Earth frame 120.
